# EUROPÄISCHE PATENTSCHRIFT

(11) **EP 3 081 371 B1**
(45) Veröffentlichungstag und Bekanntmachung des Hinweises auf die Patenterteilung: **17.07.2019**
(21) Anmeldenummer: 16165354.8
(22) Anmeldetag: 14.04.2016
(51) Int. Cl.: B30B 15/16, F16K 31/122, F16K 27/02, F16K 1/30

(54) **REGULIERVENTIL, VERWENDUNG EINES REGULIERVENTILS, SOWIE VENTILBLOCK**
CONTROL VALVE, USE OF A CONTROL VALVE, AND VALVE BLOCK
SOUPAPE DE REGLAGE, UTILISATION D'UNE SOUPAPE DE REGLAGE ET BLOC DE SOUPAPES

(30) Priorität: 14.04.2015 DE 102015105677
(43) Veröffentlichungstag der Anmeldung: 19.10.2016
(73) Patentinhaber: Hunger Maschinen GmbH, 97080 Würzburg (DE)
(72) Erfinder: Pfeuffer, Christian, 97273 Kürnach (DE)
(74) Vertreter: Witte, Weller & Partner Patentanwälte mbB

(56) Entgegenhaltungen:
- WO-A1-2012/172499
- DE-A1-102008 058 263
- DE-U1- 29 905 320
- FR-A- 1 267 882
- JP-A- 0 942 211
- US-B1- 6 209 565
- US-B1- 6 263 905

## Beschreibung

Die Erfindung betrifft ein Regulierventil für einen Vorratsbehälter einer hydraulischen Arbeitsmaschine. Die Erfindung betrifft ferner eine Verwendung eines Regulierventils. Schließlich betrifft die Erfindung einen Ventilblock mit einem Regulierventil. Allgemein betrifft die Erfindung Regulierventile für hydraulische Anwendungen. Dies kann insbesondere sogenannte wasserhydraulische Anwendungen als auch sogenannte ölhydraulische Anwendungen umfassen.

Im Rahmen der vorliegenden Offenbarung werden vorteilhafte Ausgestaltungen und Verwendungen von Regulierventilen beschrieben, dabei wird Bezug genommen auf hydraulische Pressen, insbesondere auf hydraulische Schmiedepressen. Es ist jedoch anzumerken, dass die genannten Regulierventile vorzugsweise in der Peripherie einer solchen Presse oder Schmiedepresse angeordnet sind, insbesondere bei einem Vorratsbehälter oder Druckbehälter. Ein solcher Vorratsbehälter kann etwa auch als Hochbehälter bezeichnet werden. Auch sind unter Druck stehende Vorratsbehälter bekannt. Ein solcher Vorratsbehälter wird etwa dann genutzt, wenn der Hochbehälter nicht über einem Füllventil der Schmiedepresse angeordnet werden kann und dennoch ein kavitationsfreies Nachsaugen der Druckflüssigkeit erwünscht ist. Eine weitere Bezeichnung eines solchen unter einem Vorspanndruck stehenden Vorratsbehälters ist Windkessel. Selbstverständlich sind auch andere Anwendungen denkbar.

Aus derartigen Hochbehältern oder Vorratsbehältern wird üblicherweise die Presse oder Schmiedepresse gespeist, insbesondere deren Stößelzylinder. Auch wenn sich an den Hochbehälter oder Vorratsbehälter weitere hydraulische Einrichtungen anschließen, etwa Druckerzeuger, Regelventile, Aktuatoren, Manipulatoren oder Ähnliches, so darf die Bedeutung der Nachführung oder Nachspeisung des Fluids für die Leistungsfähigkeit der Anlage nicht unterschätzt werden. Wenn etwa ein Sattel oder Stempel einer Presse mit hoher Kraft und hoher Geschwindigkeit verfahren werden soll, muss eine beträchtliche Menge des Arbeitsfluids (mit hohem Volumenstrom) bereitgestellt, unter Druck gesetzt und zugeführt werden. Somit bestehen auch hohe Anforderungen an die Nachspeisung aus Hochbehältern oder Druckbehältern.

Es sind beispielsweise Schmiedepressen bekannt, bei denen Wasser als Druckmittel genutzt wird. Es wird dann allgemein von wasserhydraulischen Pressen oder Schmiedepressen gesprochen. Daneben sind Schmiedepressen bekannt, bei denen das Druckmittel oder Arbeitsmittel ein ölbasiertes Fluid umfasst. In diesem Zusammenhang wird allgemein von Ölhydraulik gesprochen.

Beispielhaft ist aus der DE 22 23 708 C3 eine Steuerung für hydraulische Freiform-Schmiedepressen bekannt, die für Rückzug und Antriebszylinder getrennt angeordnete und unabhängig voneinander steuerbare Kolbenventile sowie einen über ein Überdruckventil abgesicherten Druckmittelantrieb mittels einer Pumpe und einer gesteuerten Vorfüllung aus einem Druckmittelbehälter umfasst, wobei das Kolbenventil für den Antriebszylinder mit größeren Durchflussquerschnitten versehen und im Füllzug angeordnet ist, und wobei ferner dem Kolbenventil für den Rückzug ein damit in Verbindung stehendes, federbelastetes, steuerbares Druckventil hydraulisch parallel geschaltet ist.

Hydraulische Pressen, insbesondere hydraulische Schmiedepressen, sind seit langem bekannt. Insbesondere eignen sich hydraulische Schmiedepressen für Sonderanwendungen, bei denen relativ komplexe Bauteile mit geringen Stückzahlen gefertigt werden. Hydraulische Schmiedepressen weisen eine entsprechende Druckerzeugungseinrichtung auf, etwa Pumpen oder dergleichen. Mittels der Druckerzeugungseinrichtung wird ein Arbeitsfluid unter Druck gesetzt, so dass ein Manipulator der Schmiedepresse betätigt werden kann. Auf diese Weise können hohe Kräfte erzeugt bzw. übertragen werden.

Je nach gegebenem Verdrängungsvolumen muss eine bestimmte Menge des Druckmittels oder Druckfluid bereitgestellt und nachgefüllt werden, wenn die hydraulische Schmiedepresse in Betrieb ist. Ferner muss mit Undichtigkeiten und sonstigen Druckmittelverlusten gerechnet werden. Insofern ist eine Nachführung oder Nachspeisung des Druckmittels unerlässlich. Wie vorstehend bereits angedeutet, kann dies etwa durch einen Hochbehälter bewerkstelligt werden, der tatsächlich oberhalb eines Niveaus der Schmiedepresse angeordnet ist und somit das Druckmittel schwerkraftbedingt unter Druck setzen kann, um dieses sicher nachzufüllen oder nachzuspeisen. Daneben sind auch unter Druck stehende bzw. unter Druck bringbare Vorratsbehälter bekannt, die in ähnlicher Weise zur Nachführung und Nachspeisung des Druckmittels ausgebildet sind. Zwischen dem Vorratsbehälter und der Druckerzeugungseinheit sind üblicherweise Klappenventile oder Ähnliches vorgesehen, um in einfacher Weise ein Nachspeisen zu ermöglichen.

Es hat sich jedoch gezeigt, dass auf Basis dieser Konfiguration die Leistungsfähigkeit einer Presse oder Schmiedepresse nicht über ein bestimmtes Maß hinaus gesteigert werden kann. Insbesondere dann, wenn in kürzester Zeit eine beträchtliche Menge des Druckmittels nachgeführt werden muss, können etablierte Lösungen für Klappenventile oder dergleichen an ihre Grenzen gelangen. Ferner erlauben Klappenventile keine gezielte Steuerung oder Regelung des Nachspeisevorgangs. Sofern jedoch beim eigentlichen Antrieb der Presse oder Schmiedepresse eine aufwendige Regelung oder Steuerung erfolgen soll, muss auch den Vorratsbehältern (Hochbehälter, Druckbehälter oder dergleichen) mehr Aufmerksamkeit gewidmet werden.

Aus der US 6,263,905 B1 ist eine Regelventilanordnung bekannt, die ein Regulierventil umfasst, das über ein Pilotventil ansteuerbar ist, wobei das Regulierventil in einem Gehäuse aufgenommen ist und einen Ventilteller aufweist, der dichtend an einem Ventilsitz des Gehäuses zu Anlage kommen kann, wobei der Ventilteller einlassseitig des Ventilsitzes aufgenommen ist und eine einlassseitige Dichtfläche des Ventilsitzes kontaktieren kann, um einen Durchfluss zu sperren.

Weitere Ventilanordnungen sind aus der US 6,209,565 B1, der US 4,270,727 A, der DE 14 02 525 A, der FR 1 267 882 A, sowie der DE 10 2008 058 263 bekannt. Aus der JP-H09 42 211 A ist eine Ventilanordnung mit einer PWM-Steuerung bekannt.

Vor diesem Hintergrund liegt der Erfindung die Aufgabe zugrunde, ein Regulierventil, eine vorteilhafte Verwendung eines Regulierventils, sowie einen Ventilblock mit einem solchen Regulierventil anzugeben, die die Leistungsfähigkeit hydraulischer Arbeitsmaschinen allgemein erhöhen können. Insbesondere soll das Regulierventil möglichst einen geringen Strömungswiederstand und folglich eine hohe Durchsatzleistung mit sich bringen. Daneben ist das Regulierventil vorzugsweise feinfühlig steuerbar, um auf sich ändernde Betriebsbedingungen reagieren zu können. Ferner ist es bevorzugt, wenn das Regulierventil ausgelegt und/oder betreibbar ist, um die Leistungsfähigkeit von Schmiedepressen weiter zu erhöhen und dabei die stets präsente Gefahr einer Kavitation des Druckmittels zu verringern. Schließlich soll das Regulierventil möglichst leckagefrei oder leckagearm betrieben werden können.

Das Ventil betreffend wird die Aufgabe der Erfindung durch ein Regulierventil für einen Vorratsbehälter einer hydraulischen Arbeitsmaschine, insbesondere zur Füllstandsregulierung in einem Hochbehälter einer hydraulischen Presse, gelöst, wobei das Regulierventil als Sitzventil ausgestaltet ist und einen Ventilstößel mit einem Schaft und einem Teller aufweist, wobei der Ventilstößel mit dem Teller zwischen einer Freigabestellung und einer Sperrstellung verlagerbar ist, wobei der Teller in der Sperrstellung an einer Sperrkontur anliegt, und wobei das Regulierventil hydraulisch aktivierbar ist, wobei der Teller des Ventilstößels einem Ventileintritt zugewandt ist, wobei der Teller in der Sperrstellung an seiner dem Ventileintritt abgewandten Seite an der Sperrkontur anliegt, wobei der Teller in der Freigabestellung von der Sperrkontur in Richtung auf den Ventileintritt abgehoben ist. wobei das Regulierventil als Schrägsitzventil ausgestaltet ist, wobei der Teller gegenüber der Strömungsrichtung geneigt ist, wobei der Schaft um 30° bis 60° gegenüber der Strömungsrichtung geneigt ist, wobei das Regulierventil in der Freigabestellung axial und radial durchströmt wird, wobei der Teller in der Freigabestellung entgegen der Strömungsrichtung des Fluids von der Sperrkontur abgehoben ist, wobei das Regulierventil in Cartridge-Bauweise gestaltet ist und in ein Gehäuse eines Ventilblocks einführbar ist, und wobei am Cartridge-Gehäuse die Sperrkontur vorgesehen ist, an der der Teller des Ventilstößels in der Sperrstellung dichtend zur Anlage gelangt.

Die Aufgabe der Erfindung wird auf diese Weise vollkommen gelöst.

Erfindungsgemäß wird nämlich zur Füllstandsregulierung des Hochbehälters bzw. für ähnlichen Anwendungen bei Vorratsbehältern von hydraulischen Arbeitsmaschinen ein Regulierventil eingesetzt, das im Gegensatz zu reinen Klappenanordnungen als Sitzventil ausgestaltet ist und demgemäß eine definierte Passfläche aufweist, so dass einerseits in der Sperrstellung eine Leckagefreiheit bzw. Leckagearmut gewährleistet ist. Darüber hinaus ist das als Sitzventil ausgestaltete Regulierventil regelbar bzw. steuerbar, um auf sich ändernde Betriebsbedingungen bzw. aktuelle Einsatzbedingungen der hydraulischen Arbeitsmaschine reagieren zu können.

Bei der hydraulischen Arbeitsmaschine handelt es sich vorzugsweise um eine hydraulische Schmiedepresse. Die Sperrkontur ist vorzugsweise als konische Ringkontur ausgestaltet. Dies hat den Vorteil, dass Fertigungstoleranzen nur einen geringen Einfluss auf die Dichtwirkung bzw. Sperrwirkung in der Sperrstellung haben. In der Sperrstellung ist die Gefahr von Leckagen sehr gering. Sofern das Regulierventil als Kegelsitzventil ausgestaltet ist, ist ein weiterer Vorteil, dass in der Sperrstellung der Arbeitsdruck die Dichtwirkung bzw. den Dichtsitz des Regulierventils erhöht.

Einfach gesagt entspricht ein solches Regulierventil von seiner grundsätzlichen Funktion her einem Nachfüllventil eines WC-Spülkastens, das den Füllstand bzw. das (Wieder-) Auffüllen des Spülkastens steuert. Demgegenüber entspricht ein klassisches Füllventil vereinfach gesagt dem Ablaufventil des Spülkastens, das den Wasserfluss in das Spülbecken steuert. Es versteht sich, dass das "Nachfüllventil" und das "Ablaufventil" hierbei verschiedenen Anforderungen unterliegen und jedes für sich optimal ausgelegt sein sollte. Der voranstehende Vergleich dient nur zu Veranschaulichung und Abgrenzung der Einsatzgebiete verschiedener Ventiltypen und kann daher selbstverständlich nicht einszu-eins auf das hier beschriebene Regulierventil übertragen werden. Insofern soll dieses Beispiel nicht ein einem die Erfindung einschränkendem Sinne ausgelegt werden.

Sitzventile können derart ausgelegt werden, dass in der Freigabestellung ein hoher Durchsatz gegeben ist. Dies kann dazu beitragen, dass Kavitationseffekte am Regulierventil unterbunden werden. Auf diese Weise kann das Regulierventil auch bei einem hohen Durchsatz (Volumenstrom) sicher betrieben werden. Es ist allgemein von Vorteil, wenn das Regulierventil strömungsoptimiert ist, so dass geringe Druckverluste im Betrieb entstehen können.

Das Regulierventil kann allgemein zur Nachspeisung bzw. Durchführung eines Arbeitsfluids für eine Presse oder Schmiedepresse ausgestaltet sein. Bei dem Arbeitsfluid kann es sich etwa um ein wasserbasiertes Fluid oder ein ölbasiertes Fluid handeln. Das Fluid kann etwa einen Überdruck (gegenüber einem Umgebungsdruck) von etwa 0 bar bis ungefähr 10 bar, vorzugsweise von etwa 1 bar bis 8 bar aufweisen. Auf diese Weise wird sichergestellt, dass eine hinreichend große und definierbare Menge des Druckfluids in kürzester Zeit der eigentlichen Krafterzeugungseinheit der Presse oder Schmiedepresse zugeführt werden kann. Bei der Krafterzeugungseinheit handelt es sich üblicherweise um Hydraulikzylinder oder Stößelzylinder der Presse, die mit einer Hydraulikpumpeneinheit der Antriebshydraulik zusammenwirken, um den erforderlichen Druck zu erzeugen. Erneut wird betont, dass das Regulierventil vorrangig zur Füllstandsregulierung in Vorratsbehältern oder Hochbehältern von Schmiedepressen oder Pressen zum Einsatz kommen kann. Somit darf das Regulierventil nicht mit originären Füllventilen verwechselt werden, die für Drücke von mehreren hundert bar ausgelegt sein können, etwa für maximale Drücke von bis zu 300 bar oder gar 350 bar. Somit müssen Füllventile wesentlich massiver als das Regulierventil ausgeführt sein und werden nach anderen Prämissen angesteuert.

Gemäß einer Weiterbildung des Regulierventils ist das Regulierventil als Durchgangsventil gestaltet, insbesondere als strömungsoptimiertes Durchgangsventil. Ein Durchgangsventil kann allgemein ein Ventil betreffen, bei dem der Eintritt und der Austritt im Wesentlichen in einer gemeinsamen Richtung orientiert sind. Dies heißt mit anderen Worten, der Eintritt und der Austritt bzw. der Eingang und der Ausgang können (axial betrachtet) in Überdeckung liegen. Die Gestaltung als Durchgangsventil kann den Vorteil mit sich bringen, dass der effektive Querschnitt des Regulierventils nicht oder nur unwesentlich kleiner als der Querschnitt am Eintritt oder Austritt ist. Auch dies kann dazu beitragen, dass das Ventil im Betrieb hohe Volumenströme bereitstellen kann.

Der Teller des Ventilstößels ist einem Ventileintritt zugewandt, wobei der Teller in der Sperrstellung an seiner dem Ventileintritt abgewandten Seite an der Sperrkontur anliegt. Mit anderen Worten ist der Teller in der Freigabestellung von seinem Sitz abgehoben. Dieser Hub erfolgt grundsätzlich entgegen der Strömungsrichtung. Dies hat den Vorteil, dass das Ventil besonders einfach und schnell von der Freigabestellung in die Sperrstellung überführt werden kann. Der Druck des Druckmittels, das das Regulierventil durchströmt, kann zum Verschließen oder Sperren des Ventils beitragen. Jedoch ist die hierbei erzeugte Kraft regelmäßig nicht hoch genug, um das Regulierventil selbsttätig zu schließen. Umgekehrt ist es grundsätzlich auch vorstellbar, das Regulierventil gegensinnig zu orientieren, wobei der Teller dem Austritt oder Auslass zugewandt ist. Dies ist möglich, da der anliegende Druck des durchströmenden Mediums nicht übermäßig hoch ist.

Mit anderen Worten ist der Teller in der Freigabestellung von der Sperrkontur in Richtung auf den Ventileintritt abgehoben.

Die Gestaltung des Regulierventils als Sitzventil mit einem Tellerstößel hat den weiteren Vorteil, dass die Abdichtung in der Sperrstellung über Konusflächen gewährleistet werden kann. Auf diese Weise wird einerseits im Wesentlichen nur der Teller des Ventils in der Sperrstellung durch das anliegende (gesperrte) Druckfluid belastet. Im Vergleich zu aus dem Stand der Technik bekannten Lösungen (Kolbenventile, Klappenventile oder Ähnliches) ist die Dichtungswirkung bzw. Dichtheit wesentlich verbessert.

Gemäß einer weiteren Ausgestaltung des Regulierventils ist dieses als Proportionalventil gestaltet. Mit anderen Worten weist das Regulierventil nicht nur zwei diskrete Stellungen auf, also nicht nur die eine Sperrstellung und die eine Freigabestellung. Vielmehr kann das Regulierventil zwischen den Extremlagen (Freigabestellung und Sperrstellung) eine Mehrzahl weiterer Stellungen einnehmen. Beispielhaft kann in der Freigabestellung ein Durchsatz von 100 % definiert sein. Demgemäß ist für die Sperrstellung ein Durchsatz von 0 % definiert. Zwischen der Freigabestellung und der Sperrstellung kann das Regulierventil eine Vielzahl von Positionen einnehmen, die demgemäß durch einen bestimmten Durchsatz gekennzeichnet sind, der zwischen 0 % und 100 % beträgt. Es kann sich dabei um eine definierte Anzahl fixer Zwischenstellungen handeln. Alternativ ist es vorstellbar, das Regulierventil als stufenloses Proportionalventil zu betreiben, also etwa den Durchsatz stufenlos zwischen 0 % (Sperrstellung) und 100 % (Freigabestellung) zu steuern. Gleichwohl kann das Regulierventil grundsätzlich auch als Ventil mit diskreten Schaltstellungen, etwa als Auf-Zu-Ventil betrieben werden.

Es versteht sich, dass alternative Ausgestaltungen des Regulierventils eine diskrete Ventilverstellung beinhalten. Dies kann im Extremfall lediglich zwei Stellungen für das Regulierventil beinhalten, nämlich eine geschlossene Stellung (Durchsatz 0 %) und eine geöffnete Stellung (Durchsatz 100 %).

Gemäß einer weiteren Ausgestaltung des Regulierventils ist dieses über ein getaktet gesteuertes Pilotventil ansteuerbar. Das Pilotventil kann auf Basis einer Pulsweitenmodulation angesteuert werden. Auch auf diese Weise kann das Regulierventil als "simuliertes" Proportionalventil betrieben werden. Dies ist selbst dann möglich, wenn das Pilotventil lediglich diskrete Ventilstellungen erlaubt. Mittels einer Pulsweitmodulation kann beispielsweise definiert werden, über welchen Anteil einer bestimmten Periode das Ventil geschlossen und geöffnet sein soll. Bezogen auf die Zeitdauer der Periode kann das Ventil grundsätzlich derart angesteuert werden, dass dieses zwischen 0 % Durchfluss und 100 % Durchfluss bereitstellt. Es versteht sich, dass das Regulierventil üblicherweise gedämpft auf Impulse des Pilotventils reagiert. Andere Arten der Ansteuerung des Pilotventils sind denkbar.

Das Regulierventil ist in Cartridge-Bauweise gefertigt und in ein Gehäuse eines Ventilblocks einführbar. Auf diese Weise kann das Regulierventil modular gestaltet sein und durch den Ventilblock an eine tatsächliche Anwendung angepasst werden. Der Ventilblock kann einen Eingang oder Einlass und einen Ausgang oder Auslass für das Regulierventil bereitstellen. Somit kann auch ein Gehäuse des Ventilblocks ein zusätzlicher funktionaler Bestandteil des Ventils sein.

Das Regulierventil ist als Schrägsitzventil ausgestaltet, wobei der Teller gegenüber der Strömungsrichtung geneigt ist. Mit anderen Worten kann der Teller etwa dem Einlass des Regulierventils zugewandt sein, wobei ein Schaft des Ventilstößels des Regulierventils gegenüber der Strömungsrichtung geneigt
ist. Die Strömungsrichtung kann sich beispielhaft durch eine Ausrichtung bzw. Anordnung des Eingangs und/oder des Ausgangs des Regulierventils ergeben. Beispielhaft können der Eingang und der Ausgang konzentrisch angeordnet und ausgerichtet sowie axial voneinander versetzt sein. Ein Ventilschaft des Regulierventils ist um 30° (Grad) bis 60° gegenüber der Strömungsrichtung geneigt. Üblicherweise ist der Ventilschaft von Regulierventilen, die als Schrägsitzventil ausgestaltet sind, um etwa 45° gegenüber einer (gedachten) Strömungsrichtung zwischen dem Eingang und dem Ausgang des Ventils geneigt. Dies hat den Vorteil, dass nur geringe Strömungsverluste auftreten, so dass ein hoher Durchsatz gewährleistet ist.

Gemäß noch einer weiteren Ausgestaltung des Regulierventils ist dieses an einer vom Ventilstößel abgewandten Endfläche des Tellers anströmbar, wobei das das Regulierventil durchströmende Fluid in einem rückwärtigen Bereich des Ventilstößels im Wesentlichen radial abführbar ist. Mit anderen Worten kann das Regulierventil axial angeströmt werden, wobei ein Zulauf bzw. eine Anströmung beim Teller des Ventilstößels erfolgt. Im abgehobenen Zustand des Regulierventils kann das einströmende Fluid am Teller vorbeiströmen und zumindest abschnittsweise am Schaft des Ventilstößels entlangströmen. Ein Abführen bzw. ein Abströmen des Druckmittels kann zumindest abschnittsweise radial erfolgen, etwa unter einem Winkel, der gegenüber der Längsachse des Ventilstößels um mindestens 30° bis etwa 120°, vorzugsweise um etwa 60° bis 105° geneigt ist. Somit ist das Regulierventil als Schrägsitzventil gestaltet, das eine axiale Anströmung und eine radiale Abströmung umfasst.

Es ist mit anderen Worten also vorgesehen, dass das Regulierventil nicht vollständig axial und auch nicht vollständig radial durchströmt wird. Dies wirkt sich vorteilhaft auf die Dichtigkeit, die Regelbarkeit sowie den Durchsatz aus.

Gemäß noch einer weiteren Ausgestaltung des Regulierventils ist dieses lagegeregelt, wobei der Schaft des Ventilstößels mit einem Wegsensor gekoppelt ist. Mit anderen Worten kann etwa vorab empirisch ermittelt werden, welchen Volumenstrom oder Durchsatz (etwa in %) das Regulierventil abhängig von gegebenen Betriebsbedingungen bzw. von gegebenen Eigenschaften des Druckmittels das Regulierventil bereitstellt. Dies kann im Bezug zu Ventilstellungen, also etwa zu einem aktuellen Hub des Ventilstößels bzw. von dessen Teller gebracht werden. Auf diese Weise können eine Kennlinie bzw. ein Kennfeld ermittelt werden, auf deren Basis das Regulierventil betreibbar bzw. ansteuerbar ist. Es kann sich eine feinfühlige und schnelle Regelung des Regulierventils ergeben.

In besonders vorteilhafter Weise kann ein Regulierventil gemäß einem der vorstehend beschriebenen Aspekte als Ventil zur Füllstandsregulierung für einen Hochbehälter oder einen Druckspeicher einer hydraulischen Schmiedepresse verwendet werden. Das Regulierventil kann dazu beitragen, das Nachsaugen oder Nachspeisen des Druckmittels bei sich ändernden Betriebsparametern zu verbessern.

Vorzugsweise wird das Regulierventil hierbei mit einem Vorsteuerventil oder Pilotventil gekoppelt. Mit anderen Worten kann das Regulierventil als vorgesteuertes Regulierventil gestaltet und verwendet sein. Vorzugsweise ist die Vorsteuerung derart ausgebildet, dass das Regulierventil allein mit der Vorsteuerung zwischen der Sperrstellung und der Freigabestellung verfahren werden kann. Mit anderen Worten muss das Ventil nicht unbedingt als federbelastetes Ventil gestaltet sein, sondern kann vielmehr rein hydraulisch geregelt werden. Vorzugsweise wird das Regulierventil durch das Vorsteuerventil mit dem gleichen Druckfluid oder Druckmittel angesteuert, das auch das Regulierventil durchströmt. Ferner ist es bevorzugt, wenn das Regulierventil als Durchgangsventil verwendet wird, bei dem ein Eintritt oder Eingang und ein Austritt oder Ausgang im Wesentlichen konzentrisch zueinander und in der gleichen Richtung orientiert sind.

Den Ventilblock betreffend wird die Aufgabe der Erfindung durch einen Ventilblock für eine hydraulische Schmiedepresse gelöst, der ein Regulierventil gemäß einem der vorstehend beschriebenen Aspekte umfasst, wobei ferner ein Pilotventil zum Aktivieren des Regulierventils vorgesehen ist, wobei das Pilotventil vorzugsweise elektrisch ansteuerbar ist, und wobei das Regulierventil fluidgesteuert ist. Wenn im Rahmen dieser Offenbarung davon die Rede ist, dass das Regulierventil fluidgesteuert ist, so können darunter Ausführungsformen zu verstehen sein, bei denen das Regulierventil mittels des gleichen Fluids steuerbar oder regelbar ist, das normalerweise in der Freigabestellung auch das Regulierventil durchströmt. Mit anderen Worten kann das Regulierventil durch das gleiche Hydraulikfluid zwischen der Sperrstellung und der Freigabestellung bewegt werden, das auch im Behälter gespeichert ist, dessen Abfluss oder Füllstand durch das Regulierventil gesteuert ist.

In vorteilhafter Ausbildung des Ventilblocks weist dieser ferner ein Druckminderventil auf. Auf diese Weise kann eine Druckregulierung bewirkt werden, insbesondere eine eingangsseitige Druckregulierung. Auf diese Weise wird sichergestellt, dass der Eingangsdruck am Regulierventil nicht zu hoch ist.

Gemäß einer weiteren Ausgestaltung umfasst der Ventilblock ein Gehäuse, das eine Aufnahme für ein Regulierventil in Cartridge-Bauweise definiert und einen Eingangsflansch sowie einen Ausgangsflansch aufweist, die vorzugsweise konzentrisch zueinander ausgerichtet sind. Auf diese Weise kann ein Cartridge-Ventil in die Aufnahme eingeführt werden und als Durchgangsventil zur Verwendung kommen.

Es ist weiter bevorzugt, das Regulierventil schräg in den Ventilblock einzubauen und gegenüber einer Strömungsrichtung zu neigen, die durch den Eingangsflansch und den Ausgangsflansch definiert ist. Mit anderen Worten kann das Regulierventil als Schrägsitzventil im Ventilblock vorgesehen sein. Dies kann in Anbetracht der definierten Durchflussrichtung weitere Vorteile mit sich bringen. Ein als Schrägsitzventil ausgestaltetes Stößelventil oder Tellerventil kann insbesondere einen guten Kompromiss im Hinblick auf den Strömungswiderstand sowie die Dichtigkeit bzw. Leckagefreiheit darstellen.

Es ist generell von Vorteil, wenn ein Ventilhub, der das Regulierventil aus der Sperrstellung in die Freigabestellung überführt, entgegen einer Strömungsrichtung des anströmenden Druckmittels erfolgt. Auf diese Weise kann das Druckmittel selbst zur Verbesserung der Dichtwirkung in der Sperrstellung beitragen. Es ist eine hohe Betriebssicherheit gegeben. Insofern kann das Regulierventil zumindest teilweise eine Rückschlagsventilcharakteristik aufweisen.

Ein weiterer Aspekt der Offenbarung betrifft die Verwendung eines Regulierventils nach einer der hierin beschriebenen Ausgestaltungen als Ventil zur Füllstandsregulierung für einen Hochbehälter oder einen Druckspeicher einer hydraulischen Schmiedepresse.

Ein weiterer Aspekt der Offenbarung betrifft eine hydraulische Presse mit einem Hochbehälter oder einem Druckspeicher und mit einem Regulierventil nach einer der hierin beschriebenen Ausgestaltungen zur Füllstandsregulierung des Hochbehälters oder des Druckspeichers. Die hydraulische Presse umfasst gemäß einer weiteren Ausgestaltung einen Ventilblock gemäß zumindest einer hierin beschriebenen Ausführungsform, dem das Regulierventil zugeordnet ist.

Es versteht sich, dass die vorstehend genannten und die nachstehend noch zu erläuternden Merkmale der Erfindung nicht nur in der jeweils angegebenen Kombination, sondern auch in anderen Kombinationen oder in Alleinstellung verwendbar sind, ohne den Rahmen der vorliegenden Erfindung zu verlassen.

Weitere Merkmale und Vorteile der Erfindung ergeben sich aus der nachfolgenden Beschreibung bevorzugter Ausführungsbeispiele unter Bezugnahme auf die Zeichnungen. Es zeigen:
- Fig. 1: eine schematisch stark vereinfachte frontale Ansicht einer Schmiedepresse, die mit Behältern zur Druckmittelversorgung gekoppelt ist;
- Fig. 2: eine schematische Schnittansicht eines Klappenventils;
- Fig. 3: eine geschnittene Seitenansicht eines in einem modulartig gestalteten Ventilblock aufgenommenen Regulierventils, das bei einer Schmiedepresse gemäß Fig. 1 zum Einsatz kommen kann;
- Fig. 4: Teilansicht des Zulaufs des Ventilblocks gemäß Fig. 3;
- Fig. 5: eine Teilansicht des Ablaufs des Ventilblocks gemäß Fig. 3;
- Fig. 6: eine geschnittene Teilansicht des in dem Ventilblock aufgenommenen Regulierventils gemäß Fig. 3, in einer Freigabestellung; und
- Fig. 7: eine geschnittene Teilansicht des in dem Ventilblock aufgenommenen Regulierventils gemäß Fig. 3 in einer Freigabestellung.

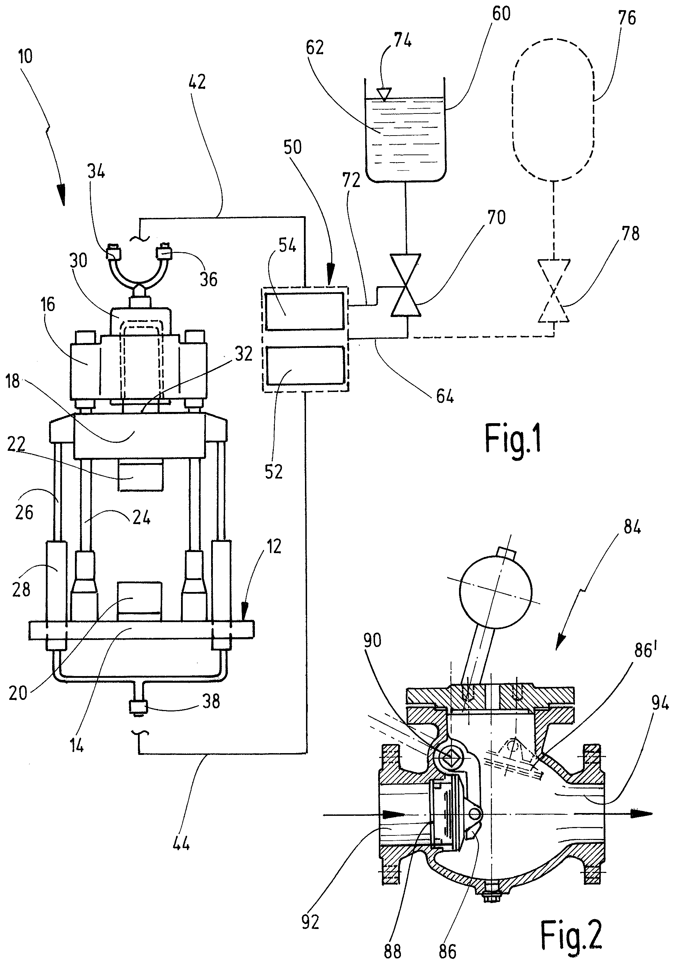

Fig. 1 veranschaulicht eine beispielhafte schematisch stark vereinfachte Ausgestaltung einer Ausführungsform einer hydraulischen Presse, insbesondere einer hydraulischen Schmiedepresse. Die hydraulische Presse ist insgesamt mit 10 bezeichnet. Die hydraulische Presse weist eine Basis oder ein Gestell 12 auf. Ferner ist an einer Unterseite der Basis 12 ein Unterholm 14 vorgesehen. An ihrem dem Unterholm 14 abgewandten Ende weist die hydraulische Presse 10 einen Oberholm 16 auf. Dem Oberholm 16 ist ein Laufholm 18 benachbart, der verfahrbar bzw. verlagerbar ist.

Die hydraulische Presse 10 eignet sich für kombinierte Herstellungsverfahren, die das Urformen sowie das Umformen von Werkstücken betreffen. Eine Kontur des zu fertigenden Werkstücks kann gemeinsam durch einen Untersattel 20 und einen Obersattel 22 definiert werden. Der Untersattel 20 ist am Unterholm 14 aufgenommen. Der Obersattel 22 ist am Laufholm 18 aufgenommen.

Die Presse 10 weist ferner Säulen 24 auf, die den Unterholm 14 und den Oberholm 16 verbinden. Der Laufholm 18 ist an den Säulen 24 verschieblich gelagert. Zum Antrieb des Laufholms 18 sind beispielsweise Paarungen vorgesehen, die Kolben 26 und Zylinder 28 umfassen. Auf diese Weise kann der Laufholm 18 vertikal verfahren werden.

Am Oberholm 16 ist ferner ein Presszylinder 30 aufgenommen, der mit einem Druckkolben 32 gekoppelt ist. Am Druckkolben 32 ist der Obersattel 22 aufgenommen. Der Presszylinder 30 kann aktiviert werden, um den Druckkolben 32 vertikal zu verfahren. Der Untersattel 20 und der Obersattel 22 können gemeinsam auf ein zwischen diesen aufgenommenes Werkstück einwirken, um dieses zu verformen.

Ferner sind in Fig. 1 Druckanschlüsse 34, 36, 38 angedeutet, über die die beweglichen Komponenten der Presse 10 mit einem Druckmittel versorgt werden können. Die Druckanschlüsse 34 und 36 sind beispielhaft dem Oberholm 16 bzw. dem Druckkolben 32 zugeordnet. Der Druckanschluss 38 ist beispielhaft mit der Basis 12 gekoppelt, um auf die Zylinder-Kolbenpaarung 26, 28 einzuwirken, um den Laufholm 18 zu verfahren.

In Fig. 1 sind ferner schematisch stark vereinfacht Fluidleitungen 42, 44 angedeutet, über die die Presse 10 mit dem Druckmittel oder Druckfluid versorgt werden kann. Ein mit 50 bezeichneter Block veranschaulicht eine Steuervorrichtung 50, die beispielhaft eine Einrichtung oder Einheit zur Druckerzeugung 52 sowie eine Steuereinheit 54 umfasst. Bei hydraulischen Pressen bzw. Schmiedepressen 10 sind verschiedene Ausgestaltungen von Druckerzeugungsvorrichtungen 52 und Steuereinrichtungen 54 bekannt, auf deren nähere Schilderung und Beschreibung hier verzichtet wird.

Üblicherweise wird die Presse 10 bzw. deren Steuervorrichtung 50 über einen Vorratsbehälter mit dem Hydraulikfluid versorgt, um bei Bedarf nachspeisen oder nachfüllen zu können. In Fig. 1 ist mit 60 ein Hochbehälter angedeutet, der mit einem Druckfluid oder Druckmittel 62 befüllt ist. Der Hochbehälter 60 ist über eine Zuführleitung 64 mit der Steuervorrichtung 50 gekoppelt. Dem Hochbehälter 60 ist ein Ablaufventil oder Regulierventil 70 zugeordnet, das nachfolgend allgemein als Ventil bezeichnet wird. Das Ventil 70 erlaubt eine Füllstandsregulierung bzw. ein definiertes Nachfüllen oder Nachspeisen des Druckmittels 62. Das Ventil 70 ist beispielhaft als gesteuertes Ventil ausgestaltet und über eine Regelleitung 72 mit der Steuervorrichtung 50 gekoppelt.

In Fig. 1 ist ferner mit 74 ein Füllstandssensor angedeutet. Der Füllstandssensor kann etwa einen Schwimmer oder Ähnliches umfassen. Der Füllstandssensor 74 ist beispielhaft mit der Steuervorrichtung 50 gekoppelt, um Informationen über den Füllstand im Hochbehälter 60 bzw. über einen aktuellen Durchfluss am Ventil 70 zu übermitteln und hiervor abhängig das Ventil 70 anzusteuern.

Eine alternative Ausgestaltung eines Vorratsbehälters ist in Fig. 1 durch eine gestrichelte Darstellung angedeutet. Es handelt sich dabei um einen Druckbehälter 76, der über ein Ventil 78 mit der Steuervorrichtung gekoppelt oder koppelbar ist. Ein Druckmittel, das im Druckbehälter 76 aufgenommen ist, steht üblicherweise unter einem gewissen Druck gegenüber der Umgebung. Demgegenüber wirkt üblicherweise nur die Schwerkraft auf das Druckmittel 62, das im Hochbehälter 60 aufgenommen ist. Sofern der Hochbehälter 60 jedoch oberhalb des Niveaus der Presse 10 bzw. von deren Komponenten angeordnet ist, steht das darin aufgenommene Druckmittel 62 aus Sicht der Presse 10 auch unter Druck. Die Ventile 70, 78 können grundsätzlich ähnlich gestaltet sein. Demgemäß kann auch das Ventil 78 gesteuert sein. Es versteht sich, dass die anhand der gestrichelten Darstellung in Fig. 1 veranschaulichte Ausgestaltung mit dem Druckbehälter 76 und dem Ventil 78 alternativ zum Hochbehälter 60 bzw. zu dessen Ventil 70 vorgesehen sein kann.

Fig. 2 zeigt einen Schnitt durch ein konventionelles Klappenventil 84, das üblicherweise bei Hochbehältern 60 zur Verwendung kommt. Das Klappenventil 84 weist eine verschwenkbare Klappe 86 auf, vergleiche ein in Fig. 2 mit 86' angedeutete gestrichelte Darstellung einer geöffneten Klappe. Die Klappe 86 ist an einen Sitz 88 angepasst, um einen Durchfluss durch das Klappenventil 84 zu sperren. Die Klappe 86 ist an einer Schwenkachse 90 aufgenommen, um definiert verschwenkt zu werden. Auf diese Weise kann die Klappe 86 zwischen einer Sperrstellung und einer Freigabestellung verlagert werden. Ferner weist das Klappenventil 84 einen Einlass 92 und einen Auslass 94 auf.

Das Klappenventil 84 erlaubt grundsätzlich eine Füllstandsregulierung, Nachfüllung bzw. Nachspeisung des Druckmittels 82 aus dem Hochbehälter 60. Gleichwohl gibt es Defizite im Hinblick auf die Dichtigkeit sowie die Regulierbarkeit bzw. Steuerbarkeit.

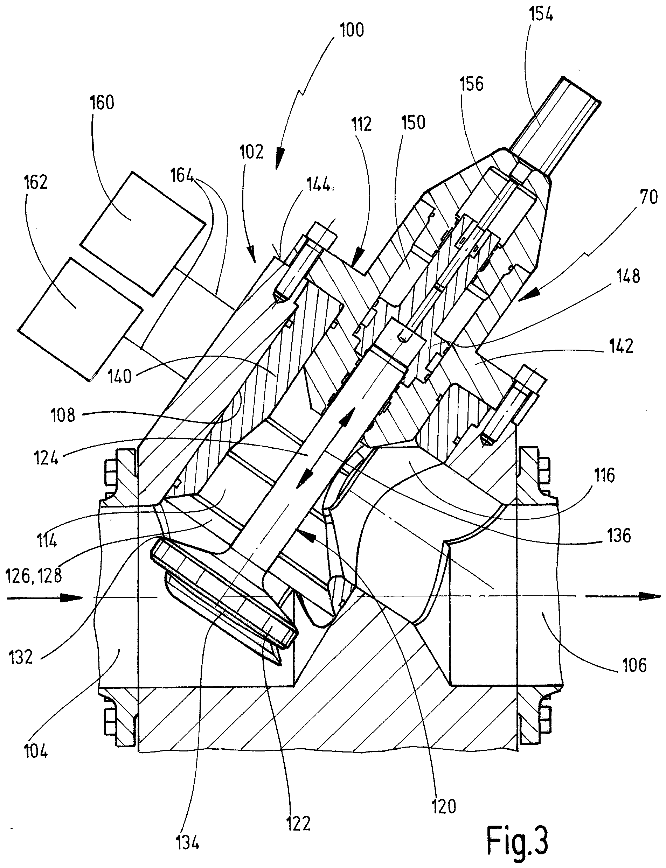

Anhand der Figuren 3 bis 7 wird ein als Regulierventil ausgestaltetes Ventil 70 veranschaulicht, das in vorteilhafter Weise bei dem Hochbehälter 60 bzw. dem Druckbehälter 76 als Auslassventil genutzt werden kann, um deren Füllstände zu regulieren. Beispielhaft kann das Ventil 70 angesteuert werden, um den aktuellen Füllstand möglichst konstant zu halten, indem etwa entsprechendes Druckmittel nachgeführt wird. Allgemein kann ein Auslegungsziel bzw. Gestaltungsziel für das Ventil 70 darin liegen, möglichst hohe Volumenströme geregelt abführen zu können, vorzugsweise bei relativ geringen Strömungsgeschwindigkeiten.

Das Ventil 70 gemäß Fig. 3 eignet sich allgemein für hydraulische Anwendungen. Dies betrifft das Gebiet der Ölhydraulik und das Gebiet der Wasserhydraulik.

Das Ventil 70 ist beispielhaft als Cartridge-Ventil ausgestaltet und in einem Gehäuse 102 eines Ventilblocks 100 aufgenommen. Der Ventilblock 100 umfasst demgemäß das Gehäuse 102 und zumindest das darin aufgenommene oder aufnehmbare Cartridge-Ventil 70. In Fig. 3 ist ein Eingang oder Eintritt mit 104 und ein Ausgang oder Auslass mit 106 bezeichnet. Das Ventil 70 ist als Durchgangsventil gestaltet. Der Eingang 104 und der Ausgang 106 sind zumindest näherungsweise richtungsgleich angeordnet, vorzugsweise zumindest näherungsweise konzentrisch zueinander ausgerichtet.

Es versteht sich jedoch, dass auch Ausgestaltungen vorstellbar sind, bei denen Einlass 104 und Auslass 106 unter einem Winkel zueinander angeordnet sind, etwa rechtwinklig. Gemäß einer solchen Ausgestaltung ist das Ventil 70 als Eckventil gestaltet. Andere Winkel zwischen 0° (Grad) und 90° (Grad) sind grundsätzlich denkbar. Eine solche Bauweise kann Bauraumvorteile mit sich bringen bzw. die Implementierung in einem vorgegebenen Einbauraum gestatten.

Im Gehäuse 102 des Ventilblocks 100 ist eine Aufnahme 108 definiert, in die das Ventil 70 einführbar ist. Das Ventil 70 weist ein Cartridge-Gehäuse 112 auf, das mit einem Einlass 114 und einem Auslass 116 versehen ist. Der Einlass 114 kann auch als axialer Einsatz bezeichnet werden. Der Auslass 116 kann auch als radialer Auslass bezeichnet werden. Die Bezeichnung axialer Einlass 114 und radialer Auslass 116 bezieht sich insbesondere auf eine Längserstreckung oder axiale Erstreckung eines Ventilstößels 120. Der Ventilstößel 120 umfasst einen Teller 122, der an einem einlassseitigen oder eingangsseitigen Ende eines Schafts 124 angeordnet ist.

Am Cartridge-Gehäuse 112 ist eine Sperrkontur 126 vorgesehen, an der der Teller 122 des Ventilstößels 120 dichtend zur Anlage gelangen kann (Sperrstellung). Die Sperrkontur 126 weist insbesondere einen konischen Sitz 128 auf, an den eine Dichtfläche 132 des Tellers 122 zur Anlage kommen kann.

In Fig. 3 ist das Ventil 70 in seiner Freigabestellung veranschaulicht. Der Teller 122 ist von der Sperrkontur 126 abgehoben. Auf diese Weise kann das Druckmittel 62 am Eingang 104 in den Ventilblock 100 eintreten, axial in das Gehäuse 112 des Ventils 70 eintreten, das Gehäuse 112 radial verlassen und schlussendlich den Ventilblock 100 über den Ausgang 106 verlassen. In der Freigabestellung ist der Teller 122 des Ventilstößels 120 entgegen der Strömungsrichtung des Fluids von der Sperrkontur 126 abgehoben. Umgekehrt kann also das Fluid mit dazu beitragen, den Teller 122 aus der Freigabestellung in die Sperrstellung zu überführen, um diesen dichtend an der Sperrkontur 126 zur Anlage zu bringen. Durch den Druck des in der Sperrstellung anliegenden Druckmittels erhöht sich die Dichtwirkung. Das Druckmittel wirkt auf eine Endfläche 134 des Tellers 122 und drückt dessen Dichtfläche 132 gegen den konischen Sitz 128 der Sperrkontur 126. Somit ist in der Sperrstellung im Wesentlichen nur der Teller 122 des Ventils 70 belastet. Eine Bewegungsrichtung zwischen der Sperrstellung und der Freigabestellung ist in Fig. 3 durch einen mit 136 bezeichneten Doppelpfeil angedeutet.

Das Gehäuse 112 des Ventils 70 umfasst beispielhaft ein erstes Gehäuseteil 140 und ein zweites Gehäuseteil 142, die miteinander gefügt sind. Das erste Gehäuseteil 140 ist im Wesentlichen zylindrisch oder rohrartig gestaltet und mit dem (axialen) Einlass 114 und dem (radialen) Auslass 116 versehen. Ferner ist am ersten Gehäuseteil 140 die mit dem konischen Sitz 128 versehene Sperrkontur 126 ausgebildet. Das zweite Gehäuseteil 142 ist stopfenartig oder buchsenartig gestaltet und verschließt das Ende des ersten Gehäuseteils 140, das im montierten Zustand dem Teller 122 des Ventilstößels 120 abgewandt ist. Somit kann das Ventil 70 nicht axial durchströmt werden. Das Druckmittel muss das Ventil 70 radial über den Auslass 116 verlassen.

Am Gehäuse 102 des Ventilblocks 100 ist eine Passfläche 144 ausgebildet, an der das Cartridge-Gehäuse 112 befestigt werden kann. Insbesondere ist das Gehäuseteil 142 dazu ausgebildet, an der Passfläche 144 befestigt zu werden. Auf diese Weise wird mittelbar auch das erste Gehäuse 140 am bzw. im Gehäuse 102 des Ventilblocks 100 festgelegt.

An seinem dem Teller 122 abgewandten Ende weist der Ventilstößel 120 einen Positionierkolben 148 auf, der mit einem Druckfluid beaufschlagt werden kann, um den Ventilstößel 120 und somit das Ventil 70 zwischen der Sperrstellung und der Freigabestellung zu verlagern. Durch geeignete Ansteuerung können auch Zwischenstellungen zwischen der Sperrstellung und der Freigabestellung erreicht werden. Demgemäß kann das Ventil 70 als Proportionalventil gestaltet sein. Es ist auch möglich, das Ventil 70 derart zu betreiben, dass dieses im Betrieb lediglich diskrete Zustände aufweist, die etwa der Sperrstellung und der Freigabestellung entsprechen, ohne dass Zwischenstellungen angefahren werden.

Der Positionierkolben 148 ist in einem Positionierzylinder 150 aufgenommen, der beispielhaft am zweiten Gehäuseteil 142 ausgebildet ist. Der Ventilstößel 120 ist längsverschieblich am zweiten Gehäuseteil 142 aufgenommen, so dass der Positionierkolben 148 im Positionierzylinder 150 axial verfahrbar ist, wenn eine entsprechende Druckbeaufschlagung erfolgt.

Am äußeren Ende des Gehäuses 112 des Ventils 70, das dem Teller 122 abgewandt ist, ist ein Positionssensor oder Wegsensor 154 ausgebildet, der mit einem Sensorstift 156 zusammenwirkt, der mit dem Schaft 124 des Ventilstößels 120 gekoppelt ist. Auf diese Weise kann über den Wegsensor 154 ein Ist-Zustand des Ventils 70 bzw. des Ventilblocks 100 ermittelt werden. Somit kann das Ventil 70 bzw. der Ventilblock 100 auf Basis der erfassten Lagesignale angesteuert werden.

Am Ventilblock 100 ist ferner vorzugsweise ein Pilotventil 160 aufgenommen, das elektrisch bzw. elektronisch ansteuerbar ist. Das Pilotventil 160 kann aktiviert bzw. gesteuert werden, um den Ventilstößel 120 und damit das Ventil 70 definiert zwischen der Sperrstellung und der Freigabestellung zu verfahren. Ferner ist am Ventilblock 100 beispielhaft ein Druckregulierventil oder Druckminderventil 162 aufgenommen. Das Druckminderventil 162 erhöht die Betriebssicherheit, da der Eingangsdruck am Ventilblock 100 sicher eingeregelt wird. In Fig. 3 sind ferner mit 164 Leitungen im Gehäuse 102 des Ventilblocks 100 angedeutet, über die zumindest das Pilotventil 160 oder das Druckminderventil 162 mit dem (Regulier-)Ventil 70 kommunizieren können.

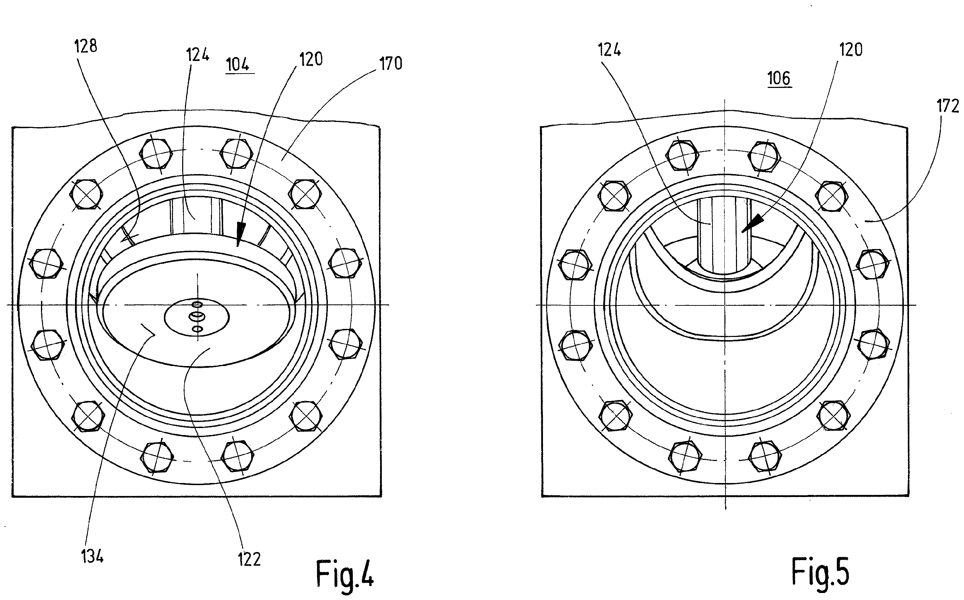

Die Figuren 4 und 5 veranschaulichen eine einlassseitige Ansicht (Fig. 4) und eine auslassseitige Ansicht (Fig. 5) des Ventilblocks 100 gemäß Fig. 3. Am Eingang oder Eintritt 104 weist der Ventilblock 100 einen Eingangsflansch 170 auf. Am Ausgang oder Auslass 106 weist der Ventilblock 100 einen Ausgangsflansch 172 auf. Fig. 4 zeigt eine Ansicht aus Sicht des einströmenden Druckmittels. Es wird ersichtlich, dass dem einströmenden Druckmittel die Endfläche 134 des Tellers 122 des Ventilstößels 120 zugewandt ist. Das Druckmittel muss am Teller 122 axial vorbeiströmen, um schlussendlich radial vom Schaft 124 des Ventilstößels austreten zu können, vergleiche hierzu Fig. 5. In Zusammenschau der Figuren 3, 4 und 5 zeigt sich, dass der Ventilblock 100 mit dem Ventil 70 einen guten Kompromiss aus den gewünschten Regeleigenschaften und einem möglichst geringen Strömungswiderstand bereitstellt. Die Druckverluste im Ventil 70 sind überschaubar, so dass hohe Volumenströme durch das Ventil 70 durchgeleitet werden können. Ferner kann die Kavitationsneigung deutlich verringert werden. Das Ventil 70 eignet sich für die Durchleitung hoher Volumenströme bei geringen Strömungsgeschwindigkeiten.

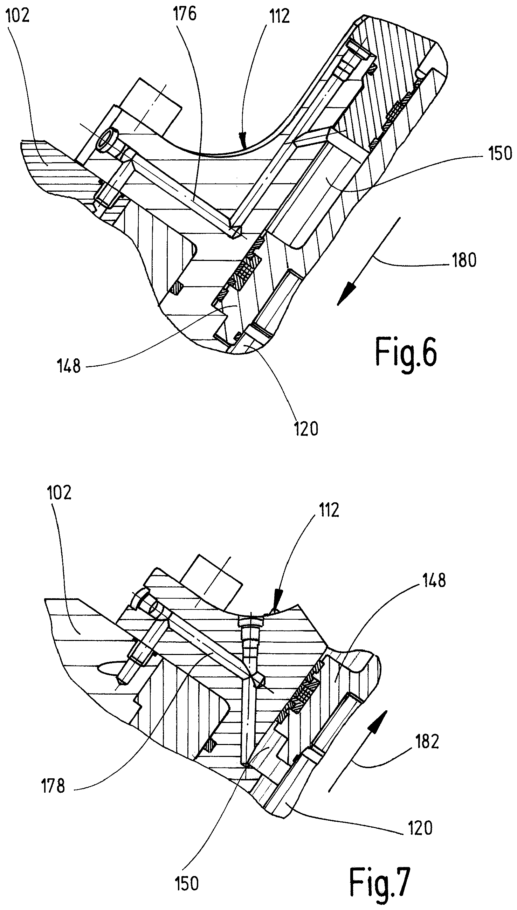

Anhand der Figuren 6 und 7 wird die Betätigung des Ventils 70 bzw. des Ventilstößels 120 näher veranschaulicht. Fig. 6 zeigt einen Zustand des Ventils 70, der dem Zustand gemäß Fig. 3 entspricht. Das Ventil 70 befindet sich in der Freigabestellung, in der der Teller 122 von der Sperrkontur 126 abgehoben ist. Das Ventil 70 kann in die Freigabestellung verbracht werden, indem die vom Teller 122 abgewandte Seite des Positionierkolbens 148 mit dem Druckmittel beaufschlagt wird, so dass dieser von der Sperrkontur 126 abgehoben wird. Die entsprechende Ansteuerung erfolgt über das Pilotventil 160. In Fig. 6 ist mit 176 ein Hubkanal angedeutet, der das Pilotventil 160 und den Positionierzylinder 150 verbindet. In den sich ergebenden Freiraum oder Verdrängerraum kann Druckmittel eingeführt werden, um die gewünschte Bewegung herbeizuführen, vergleiche einen mit 180 bezeichneten Pfeil in Fig. 6.

Demgegenüber veranschaulicht Fig. 7 den Ventilstößel 120 beim Übergang aus der Freigabestellung in die Sperrstellung, vergleiche auch einen mit 182 bezeichneten Pfeil. Zu diesem Zweck weist das Gehäuse 102 des Ventilblocks 100 bzw. das Gehäuse 112 des Ventils 70 einen Schließkanal 178 auf, über den das Druckmittel an der Seite des Positionierkolbens 148 in dem Positionierzylinder 150 gelangen kann, die dem Teller 122 des Ventilstößels 120 zugewandt ist. Somit kann der Ventilstößel 120 derart verfahren werden, dass der Teller 122 mit der Dichtfläche 132 auf der mit dem konischen Sitz 128 versehenen Sperrkontur 126 zur Anlage gelangt. Der Schließkanal 178 verbindet das Pilotventil 160 mit dem Positionierzylinder 150.

Es ist bevorzugt, wenn das Ventil 70 mit dem gleichen Druckmittel oder Hydraulikfluid regelbar ist, das den Ventilblock 100 entlang des Hauptfluidpfads durchströmt, der durch den Eingang 104 und den Ausgang 106 definiert ist.

Es versteht sich, dass die in den Figuren 6 und 7 veranschaulichten Schnitte in einer Längsachse des Ventils 70, insbesondere von dem Ventilstößel 120 angeordnet sind, jedoch zwischen den Darstelllungen gemäß den Figuren 3, 6 und 7 jeweils ein Winkelversatz bestehen kann. Das Gehäuse 102 des Ventilblocks 100 sowie das aus den Gehäuseteilen 140, 142 gebildete Gehäuse 112 des Ventils 70 können mit einer Mehrzahl sich dreidimensional erstreckender Kanäle zur Steuerung des Ventils 70 versehen sein, auf deren Detaildarstellung aus Veranschaulichungsgründen verzichtet wird. Die Kanäle können allgemein das Pilotventil 160, das Druckminderventil 162 und das (Regulier-)Ventil 70 miteinander verbinden, vergleiche auch die in den Figuren 3, 6 und 7 lediglich beispielhaft angedeuteten Kanäle 164, 176, 178).

## Patentansprüche

1. Regulierventil (70, 78) für einen Vorratsbehälter (60, 76) einer hydraulischen Arbeitsmaschine, insbesondere zur Füllstandsregulierung in einem Hochbehälter (60) einer hydraulischen Presse (10), wobei das Regulierventil (70, 78) als Sitzventil ausgestaltet ist und einen Ventilstößel (120) mit einem Schaft (124) und einem Teller (122) aufweist, wobei der Ventilstößel (120) mit dem Teller (122) zwischen einer Freigabestellung und einer Sperrstellung verlagerbar ist, wobei der Teller (122) in der Sperrstellung an einer Sperrkontur (126) anliegt, wobei das Regulierventil (70, 78) hydraulisch aktivierbar ist, wobei der Teller (122) des Ventilstößels (120) einem Ventileintritt (104) zugewandt ist, wobei der Teller (122) in der Sperrstellung an seiner dem Ventileintritt abgewandten Seite an der Sperrkontur (126) anliegt, wobei der Teller (122) in der Freigabestellung von der Sperrkontur (126) in Richtung auf den Ventileintritt (104) abgehoben ist, wobei das Regulierventil (70, 78) als Schrägsitzventil ausgestaltet ist, wobei der Teller (122) gegenüber der Strömungsrichtung geneigt ist, wobei der Schaft (124) um 30° bis 60° gegenüber der Strömungsrichtung geneigt ist, wobei das Regulierventil in der Freigabestellung axial und radial durchströmt wird, und wobei der Teller (122) in der Freigabestellung entgegen der Strömungsrichtung des Fluids von der Sperrkontur (126) abgehoben ist, **dadurch gekennzeichnet, dass** das Regulierventil (70, 78) in Cartridge-Bauweise gestaltet ist und in ein Gehäuse (102) eines Ventilblocks (100) einführbar ist, und dass am Cartridge-Gehäuse (112) die Sperrkontur (126) vorgesehen ist, an der der Teller (122) des Ventilstößels (120) in der Sperrstellung dichtend zur Anlage gelangt.

2. Regulierventil (70, 78) nach Anspruch 1, wobei das Regulierventil (70, 78) als Durchgangsventil gestaltet ist, insbesondere als strömungsoptimiertes Durchgangsventil.

3. Regulierventil (70, 78) nach einem der vorhergehenden Ansprüche, wobei das Regulierventil (70, 78) als Proportionalventil gestaltet ist.

4. Regulierventil (70, 78) nach einem der vorhergehenden Ansprüche, wobei das Regulierventil (70, 78) über ein getaktet gesteuertes Pilotventil (160) ansteuerbar ist.

5. Regulierventil (70, 78) nach einem der vorhergehenden Ansprüche, wobei das Regulierventil (70, 78) an einer vom Ventilstößel (120) abgewandten Endfläche (134) des Tellers (122) anströmbar ist, und wobei das das Regulierventil (70, 78) durchströmende Fluid in einem rückwärtigen Bereich des Ventilstößels (120) im Wesentlichen radial abführbar ist.

6. Regulierventil (70, 78) nach einem der vorhergehenden Ansprüche, wobei das Regulierventil (70, 78) lagegeregelt ist und wobei der Schaft (124) des Ventilstößels (120) mit einem Wegsensor (154) gekoppelt ist.

7. Verwendung eines Regulierventils (70, 78) nach einem der vorhergehenden Ansprüche als Ventil zur Füllstandsregulierung für einen Hochbehälter (60) oder einen Druckspeicher (76) einer hydraulischen Schmiedepresse (10).

8. Ventilblock (100) für eine hydraulische Schmiedepresse (10), mit einem Regulierventil (70, 78) nach einem Ansprüche 1 bis 6, und mit einem Pilotventil (160) zum Aktivieren des Regulierventils (70, 78), wobei das Pilotventil (160) elektrisch ansteuerbar ist und wobei das Regulierventil (70, 78) fluidgesteuert ist.

9. Ventilblock (100) nach Anspruch 8, ferner aufweisend ein Druckminderventil (162) zur Druckregulierung.

10. Ventilblock (100) nach Anspruch 8 oder 9, ferner umfassend ein Gehäuse (102), das eine Aufnahme (108) für ein Regulierventil (70, 78) in Cartridge-Bauweise definiert und einen Eingangsflansch (170) sowie einen Ausgangsflansch (172) aufweist.

11. Ventilblock (100) nach Anspruch 10, wobei der Eingangsflansch (170) sowie der Ausgangsflansch (172) konzentrisch zueinander ausgerichtet sind.

12. Ventilblock (100) nach Anspruch 10 oder 11, wobei das Regulierventil (70, 78) schräg eingebaut ist und gegenüber einer Strömungsrichtung geneigt ist, die durch den Eingangsflansch (170) sowie den Ausgangsflansch (172) definiert ist.

13. Hydraulische Presse (10), mit einem Hochbehälter (60) oder einem Druckspeicher (76), und mit einem Regulierventil (70, 78) nach einem der Ansprüche 1 bis 6 zur Füllstandsregulierung des Hochbehälters (60) oder des Druckspeichers (76).

14. Hydraulische Presse (10) nach Anspruch 13, ferner aufweisend einen Ventilblock (100) nach einem der Ansprüche 8 bis 12, dem das Regulierventil (70, 78) zugeordnet ist.

## Claims

1. A regulating valve (70, 78) for a reservoir (60, 76) of a hydraulic working machine, in particular for regulating the fill level in an elevated tank (60) of a hydraulic press (10), wherein the regulating valve (70, 78) is designed as a seat valve and comprises a valve tappet (120) having a shaft (124) and a plate (122), wherein the valve tappet (120) with the plate (122) is displaceable between a release position and a blocking position, wherein in the blocking position the plate (122) rests against a blocking contour (126), wherein the regulating valve (70, 78) is hydraulically activatable, wherein the plate (122) of the valve tappet (120) faces a valve inlet (104), wherein in the blocking position the plate (122) rests against the blocking contour (126) on its side that faces away from the valve inlet, wherein in the release position the plate (122) is lifted from the blocking contour (126) in the direction towards the valve inlet (104), wherein the regulating valve (70, 78) is arranged as an angled seat valve, wherein the plate (122) is inclined with respect to the flow direction, wherein the shaft (124) is inclined by 30° to 60° with respect to the flow direction, wherein in the release position a flow through the regulating valve present that is axial and radial, and wherein in the release position the plate (122) is lifted from the blocking contour (126) opposite to the direction of flow of the fluid, **characterized in that** the regulating valve (70, 78) has a cartridge design and is insertable into a housing (102) of a valve block (100), and **in that** on the cartridge housing (112) there is provided the blocking contour (126), against which in the blocking position the plate (122) of the valve tappet (120) comes into sealing contact.

2. The regulating valve (70, 78) according to claim 1, wherein the regulating valve (70, 78) is arranged as a straight way valve, in particular as a flow-optimized straight way valve.

3. The regulating valve (70, 78) according to any one of the preceding claims, wherein the regulating valve (70, 78) is arranged as a proportional valve.

4. The regulating valve (70, 78) according to any one of the preceding claims, wherein the regulating valve (70, 78) is controllable via a clocked-control pilot valve (160).

5. The regulating valve (70, 78) according to any one of the preceding claims, wherein a flow towards the regulating valve (70, 78) to an end face (134) of the plate (122) that is facing away from the valve tappet (120) is possible, and wherein the fluid flowing through the regulating valve (70, 78) can be discharged substantially radially in a rear region of the valve tappet (120).

6. The regulating valve (70, 78) according to any one of the preceding claims, wherein the regulating valve (70, 78) is position-regulated, and wherein the shaft (124) of the valve tappet (120) is coupled to a displacement sensor (154).

7. A use of a regulating valve (70, 78) according to one of the preceding claims as a fill level regulating valve for an elevated tank (60) or a pressure accumulator (76) of a hydraulic forging press (10).

8. A valve block (100) for a hydraulic forging press (10), comprising a regulating valve (70, 78) according to any one of claims 1 to 6, and a pilot valve (160) for activating the regulating valve (70, 78), wherein the pilot valve (160) is electrically controllable, and wherein the regulating valve (70, 78) is fluid-controlled.

9. The valve block (100) according to claim 8 further comprising a pressure reducing valve (162) for pressure regulation.

10. The valve block (100) according to claim 8 or 9, further comprising a housing (102) defining a receptacle (108) for a cartridge-type regulating valve (70, 78) and comprising an inlet flange (170) and an outlet flange (172).

11. The valve block (100) according to claim 10, wherein the inlet flange (170) and the outlet flange (172) are concentrically aligned to one another.

12. The valve block (100) according to claim 10 or 11, wherein the regulating valve (70, 78) is installed obliquely and is inclined with respect to a flow direction that is defined by the inlet flange (170) and the outlet flange (172).

13. A hydraulic press (10), comprising an elevated tank (60) or a pressure accumulator (76), and a regulating valve (70, 78) according to any one of claims 1 to 6 for regulating the fill level of the elevated tank (60) or the pressure accumulator (76).

14. The hydraulic press (10) according to claim 13, further comprising a valve block (100) according to any one of claims 8 to 12 to which the regulating valve (70, 78) is associated.

## Revendications

1. Soupape de réglage (70, 78) pour un réservoir de stockage (60, 76) d'une machine de travail hydraulique, en particulier pour le réglage du niveau de remplissage dans un réservoir surélevé (60) d'une presse hydraulique (10), dans laquelle la soupape de réglage (70, 78) est formée par une soupape à siège et présente un poussoir de soupape (120) avec une tige (124) et un plateau (122), dans laquelle le poussoir de soupape (120) avec le plateau (122) peut être déplacé entre une position de libération et une position d'arrêt, dans laquelle le plateau (122) s'applique dans la position d'arrêt sur un contour d'arrêt (126), dans laquelle la soupape de réglage (70, 78) peut être activée de façon hydraulique, dans laquelle le plateau (122) du poussoir de soupape (120) est tourné vers une entrée de soupape (104), dans laquelle le plateau (122) s'applique dans la position d'arrêt sur le contour d'arrêt (126) sur son côté détourné de l'entrée de soupape, dans laquelle le plateau (122) dans la position de libération est soulevé du contour d'arrêt (126) en direction de l'entrée de soupape (104), dans laquelle la soupape de réglage (70, 78) est formée par une soupape à siège oblique, dans laquelle le plateau (122) est incliné par rapport à la direction d'écoulement, dans laquelle la tige (124) est inclinée de 30° à 60° par rapport à la direction d'écoulement, dans laquelle la soupape de réglage dans la position de libération est traversée axialement et radialement, et dans laquelle le plateau (122) dans la position de libération est soulevé du contour d'arrêt (126) contre la direction d'écoulement du fluide, **caractérisée en ce que** la soupape de réglage (70, 78) est réalisée sous forme de cartouche et peut être introduite dans un boîtier (102) d'un bloc de soupapes (100), et **en ce que** le contour d'arrêt (126), sur lequel le plateau (122) du poussoir de soupape (120) vient s'appliquer de façon étanche dans la position d'arrêt, est prévu sur le boîtier de cartouche (112).

2. Soupape de réglage (70, 78) selon la revendication 1, dans laquelle la soupape de réglage (70, 78) est constituée par une soupape de passage, en particulier par une soupape de passage à écoulement optimisé.

3. Soupape de réglage (70, 78) selon l'une quelconque des revendications précédentes, dans laquelle la soupape de réglage (70, 78) est constituée par une soupape proportionnelle.

4. Soupape de réglage (70, 78) selon l'une quelconque des revendications précédentes, dans laquelle la soupape de réglage (70, 78) peut être commandée par une soupape pilote (160) commandée en cadence.

5. Soupape de réglage (70, 78) selon l'une quelconque des revendications précédentes, dans laquelle la soupape de réglage (70, 78) peut être abordée sur une face d'extrémité (134) du plateau (122) détournée du poussoir de soupape (120), et dans laquelle le fluide traversant la soupape de réglage (70, 78) peut être évacué d'une façon essentiellement radiale dans une région arrière du poussoir de soupape (120).

6. Soupape de réglage (70, 78) selon l'une quelconque des revendications précédentes, dans laquelle la soupape de réglage (70, 78) est régulée en position et dans laquelle la tige (124) du poussoir de soupape (120) est couplée à un détecteur de course (154).

7. Utilisation d'une soupape de réglage (70, 78) selon l'une quelconque des revendications précédentes comme soupape pour le réglage du niveau de remplissage pour un réservoir surélevé (60) ou un réservoir sous pression (76) d'une presse de forgeage hydraulique (10).

8. Bloc de soupapes (100) pour une presse de forgeage hydraulique (10), avec une soupape de réglage (70, 78) selon l'une quelconque des revendications 1 à 6, et avec une soupape pilote (160) pour activer la soupape de réglage (70, 78), dans lequel la soupape pilote (160) peut être commandée électriquement et dans laquelle la soupape de réglage (70, 78) est commandée par le fluide.

9. Bloc de soupapes (100) selon la revendication 8, présentant en outre une soupape de réduction de pression (162) pour le réglage de la pression.

10. Bloc de soupapes (100) selon une revendication 8 ou 9, comprenant en outre un boîtier (102), qui définit un logement (108) pour une soupape de réglage (70, 78) sous forme de cartouche et présente une bride d'entrée (170) ainsi qu'une bride de sortie (172).

11. Bloc de soupapes (100) selon la revendication 10, dans lequel la bride d'entrée (170) ainsi que la bride de sortie (172) sont orientées de façon concentrique l'une à l'autre.

12. Bloc de soupapes (100) selon une revendication 10 ou 11, dans lequel la soupape de réglage (70, 78) est montée en oblique et est inclinée par rapport à une direction d'écoulement, qui est définie par la bride d'entrée (170) et la bride de sortie (172).

13. Presse hydraulique (10), avec un réservoir surélevé (60) ou un réservoir sous pression (76), et avec une soupape de réglage (70, 78) selon l'une quelconque des revendications 1 à 6 pour le réglage du niveau de remplissage du réservoir surélevé (60) ou du réservoir sous pression (76).

14. Presse hydraulique (10) selon la revendication 13, présentant en outre un bloc de soupapes (100) selon l'une quelconque des revendications 8 à 12, auquel la soupape de réglage (70, 78) est associée.
